(19) Europäisches Patentamt

European Patent Office

Office européen des brevets

(11) **EP 1 290 951 A1**

(12) **EUROPEAN PATENT APPLICATION**

(43) Date of publication:
**12.03.2003 Bulletin 2003/11**

(51) Int Cl.[7]: **A23J 1/00**, A23L 1/238, A23J 3/34

(21) Application number: **01121530.8**

(22) Date of filing: **10.09.2001**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI** | • **Affolter, Michael**<br>  **1073 Savigny (CH)**<br>• **Gerber-Decombaz, Christiane**<br>  **1609 Fiaugeres (CH)**<br>• **Jaeger, Daniel**<br>  **8523 Hagenbuch (CH)** |
| (71) Applicant: **SOCIETE DES PRODUITS NESTLE S.A.**<br>**1800 Vevey (CH)** | (74) Representative: **Wavre, Claude-Alain**<br>**55, avenue Nestlé**<br>**1800 Vevey (CH)** |
| (72) Inventors:<br>• **Ziade, Alexandra**<br>  **1010 Lausanne (CH)** | |

(54) **Glutaminase**

(57)   The present invention refers to new a salt-resistant thermotolerant glutaminase from Lactobacilli. This glutaminase presents a salt dependence such that its activity in the presence of up to 15% NaCl is from 80 to 180 % of that without NaCl and a thermal stability such that its energy of activation is about 80 to 150 kJ.mol$^{-1}$.

This enzyme mas be obtained by cultivating a microorganism belonging to the genus *Lactobacillus,* producing the salt-resistant thermotolerant glutaminase and then recovering it. The present glutaminase may be useful for enhancing the yield of production of glutamate in biohydrolysate manufacture process.

FIGURE 1

EP 1 290 951 A1

## Description

The present invention relates to a new salt-resistant and thermotolerant glutaminase from *Lactobacillus* and a process for the production of such salt-resistant thermotolerant glutaminase from *Lactobacillus.*

Hydrolysed proteins have been known for use as seasonings in the form of soy sauce, which traditionally has been prepared by enzymatic hydrolysis requiring a long period of time for preparation. In producing soy sauce, protein-containing plant materials are inoculated with *Aspergilli* and the solid culture is fermented for 2 days to make koji. During this time, enzymes are produced which are able to hydrolyse proteins into peptides and amino acids in the moromi stage. The koji is mixed with a solution of common salt and water to give moromi, which is fermented for 4 weeks to 8 months by the activity of micro-organisms such as halophilic lactic acid bacteria and yeasts, and the soya sauce is obtained by removing the solids portion from the fermented moromi. Such fermentation is known as a process for producing glutamic acid-rich flavouring foods by enzymatically degrading proteins materials in the presence of high concentration of salt. In this case, the presence of salt is intended to prevent decomposition and putrefaction resulting from microbial contamination.

Glutaminase is known as playing an important role in such processes, particularly in the moromi stage, to enzymatically convert glutamine to glutamic acid (or glutamate) by deamination. This enzyme is regarded as a key enzyme that controls the savoury and umami taste of such kind of fermented products like soy sauce, for example. In the traditional soy sauce or biohydrolysate manufacturing processes, glutaminase comes from *Aspergillus* strains inoculated in the koji. However glutaminase from these moulds are reportedly being inhibited by salt concentrations above 10-15% (w/v) which are the practical conditions for soy sauce production, in the moromi stage. It is thus necessary to use a salt-resistant glutaminase in order to achieve efficient glutamic acid production.

Furthermore, enzymatic degradation of protein at high temperature is very effective for raising the rate of proteins degradation on the one hand, and preventing contamination by micro-organisms on the other hand. Since glutamine can be converted to tasteless pyroglutamic acid under increased temperature conditions in the absence of glutaminase the necessity of a thermotolerant glutaminase is desirable.

The main reason for the lower glutamic acid content in the enzymatic degradation method is that glutaminase is significantly inhibited by either high salt concentration or high temperature.

Accordingly it is thus important to have a glutaminase that is salt-resistant and thermotolerant.

Glutaminase from *Candida famate* (Japanese Patent Publication N° 38748/1994) and from *Cryptococcus albidus* (Japanese Patent Publication N° 48759/1974) are disclosed as having salt resistance and thermostability. However the relative activity in the presence of 18% salt of both enzymes is as low as about 50 to 60 % with respect to 100% activity in the absence of salt.

US 6063409 discloses a glutaminase from *Cryptoccus nodaensis* which exhibits higher salt tolerance and better temperature resistance.

Besides the fact that all these glutaminases present more or less the desired features of salt-resistance and thermotolerance, they all originates from micro-organism that generally are pathogen for human and are therefore not recognised as safe nor as food-grade. The use of cultures of such micro-organisms is impossible without extended purification in order to recover enzymes. These kind of manipulation are cumbersome and would make impossible the use of the micro-organism directly, either dead or alive, in a food product or at any step of the manufacture process of a food product.

Accordingly, the object of the present invention is to provide a glutaminase that exhibits salt-resistance and thermo-tolerance and that comes from a micro-organism that has a long history of use in food process and that is therefore food-grade.

To this end, the present invention provides a new salt-resistant and thermotolerant glutaminase from *Lactobacillus* which has a temperature dependence such that it retains more than 80% of its activity between 45°C and 55°C, a salt dependence such that its activity in the presence of up to 15% NaCl is from 80 to 180 % of that without NaCl and a thermal stability such that its energy of activation is about 80 to 150 kJ.mol$^{-1}$, preferably 90 to 120 kJ.mol$^{-1}$, more preferably 100 to 110 kJ.mol$^{-1}$.

In the drawings :

Figure 1 shows the pH dependence of the glutaminase where the vertical axis define the relative activity (R.A.) expressed as percentage of the maximum activity in the indicated pH range.

Figure 2 shows the temperature dependence of the glutaminase where the vertical axis define the relative activity (R.A.) expressed as percentage of the maximum activity in the temperature range T(°C).

Figure 3 shows the salt dependence of the glutaminase where the vertical axis define the relative activity (R.A.) expressed as percentage of the maximum activity in the NaCl concentration range in percent w/v(NaCl).

Figure 4 exhibits the thermal stability of the glutaminase and shows :

A - the change of the residual activity (R.A.) as a function of incubation time t(min.) at (+) 45°C, (o) 55°C, (Δ) 60°C, (■) 65°C and (●) 75°C
B - Arrhenius plot of the neperian logarithm of rate constant of thermal inactivation k (min⁻¹) as a function of the reciprocal of temperature (1/K).

The present invention is described in more detail hereafter.

The present salt-resistant thermotolerant glutaminase may be produced by a process which comprises cultivating a micro-organism belonging to the genus *Lactobacillus,* preferably *Lactobacillus rhamnosus* having the ability to produce the salt-resistant thermotolerant glutaminase thereby producing the salt-resistant thermotolerant glutaminase and then recovering it. A *Lactobacillus rhamnosus* strain having the required ability was deposited by way of example under the Budapest Treaty at the Collection National de Cultures de Microorganismes (CNCM), Institut Pasteur, 28 rue du Docteur Roux, 75724 Paris Cedex 15, France, on April 5, 2000 under the reference CNCM I-2433.

Usually, the cultivation process is advantageously carried out in a liquid medium in jar, flask or bioreactor, for example. The temperature of the medium may range from 35°C to 55°C, and the cultivation time may be of 6 hours or more.
The culture medium may include as carbon source, monosaccharides and oligosaccharides such as glucose, maltose, dextrines and other carbon source from vegetal origin such as wheat, corn, wheat gluten or soya for example. The culture medium may include as nitrogen source includes peptides, proteins and amino acids coming from from vegetal origin such as wheat, corn, wheat gluten or soya as well, for example.
The culture medium obtained after cultivation may be used as such for enzyme activity characterisation but may also be subjected to solid/liquid separation and purification. The culture medium may also be added into a protein containing medium for the glutaminase to deaminates the glutamine contained. However since the salt-resistant thermotolerant glutaminase according to the present invention is membrane-bound a further step may be necessary to release the enzyme from the cells in order to further characterise it and/or to increase its activity. Thus, conventional enzyme extraction methods may be applied. For example, it is possible to use mechanical grinding and disruption, sonication or ultrasonication, use of detergents, lysis of the cells using lysozyme or other kind of method allowing release of the enzyme from the membrane. Hence, by these techniques, a crude enzyme solution of the salt-resistant thermotolerant glutaminase may be prepared. In order to obtain a more purified solution, the crude enzyme preparation may be subjected to a suitable combination of chromatographic adsorption-elution techniques using various kind of ion exchangers, for example DEAE cellulose, TEAE cellulose, QAE Sephadex or Hydroxyapatite, gel filtration using Sephadex or Superdex whereby a purified enzyme preparation may be obtained.
Another aspect of the present invention concerns the use of a mixture containing a salt-resistant thermotolerant glutaminase from Lactobacillus in a process for producing a biohydrolysate.
Specifically, a culture medium containing the salt-resistant thermotolerant glutaminase according to the present invention may be added in the step of mixing or in the step of fermentation and/or ageing of a process for producing biohydrolysates starting from proteinaceous material such as soy sauce process or wheat gluten hydrolysate. Such culture medium may be the cell-containing medium obtained after cultivation of *Lactobacillus rhamnosus* (CNCM I-2433). This cell-containing medium or cell-fractions-containing medium may also be concentrated by liquid-solid separation means in order to recover cell-containing residue. Advantageously, the medium used may also be a mixture in which the enzyme has been released from the cells by sonication, lysis, or any appropriate means.

Indeed, thermally denatured proteinaceous materials (soybeans, wheat gluten, ...) are mixed with thermally denatured starchy materials (rice, wheat, corn, ...) and after the water content of the mixture is adjusted to 30-45%, a koji mould is inoculated into it and cultivated in an usual manner to give solid koji which is then mixed with brine and subjected to fermentation and ageing. However, the step of hydrolysing of a protein-containing material may be performed using either endogenous enzymes from koji or technical added enzymes in the presence of a *Lactobacillus* providing a glutaminase activity, preferably a *Lactobacillus rhamnosus,* more preferably *Lactobacillus rhamnosus* (CNCM I-2433).
An other aspect of the present invention concerns the use of a mixture containing a salt-resistant thermotolerant glutaminase from Lactobacillus in a process for producing a biohydrolysate. Advantageously, the biohydrolysate is a soy sauce or wheat gluten hydrolysate. The salt-resistant thermotolerant glutaminase according to the present invention may be use at the step of hydrolysing and/or at the step of ageing in the biohydrolysate process production.
The new salt-resistant thermotolerant glutaminase (purified or cell-bound) according to the present invention may thus be added in a process for producing food and drink containing peptides and/or amino acids as a part or a majority of tasting components. In such a process protein materials or protein-containing materials are hydrolysed with at least one proteolytic enzyme or a proteolytic enzyme-containing material, such as a koji for example. Due to its high salt-resistance and thermotolerance, when the present enzyme is used in a process including protein hydrolysis at high temperature and high salt concentration in producing glutamic acid-rich seasoning, for example, foods significantly reinforced with glutamic acid as a tasting component may be obtained efficiently.

## Glutaminase activity test

Glutaminase activity is tested by determining the formation of L-glutamate from L-glutamine using a colorimetric method (kit Boehringer Mannheim, n°139 092, Darmstadt, Germany) . The reaction mixture, containing 0.5 ml of 60 mM L-glutamine in 50 mM sodium phosphate buffer pH 7.0 is preincubated at 37°C for 3 min and the reaction is started by adding 0.5 ml of the enzyme containing preparation to be tested. The incubation is carried out at 37°C for 20 to 30 min. The reaction is stopped by cooling the samples on ice. The amount of glutamate produced is subsequently enzymatically determined.
One unit (U) of glutaminase activity is defined as the amount of enzyme that liberates 1 μmol of glutamate per min under the above conditions.

## Measurement of pH-dependence

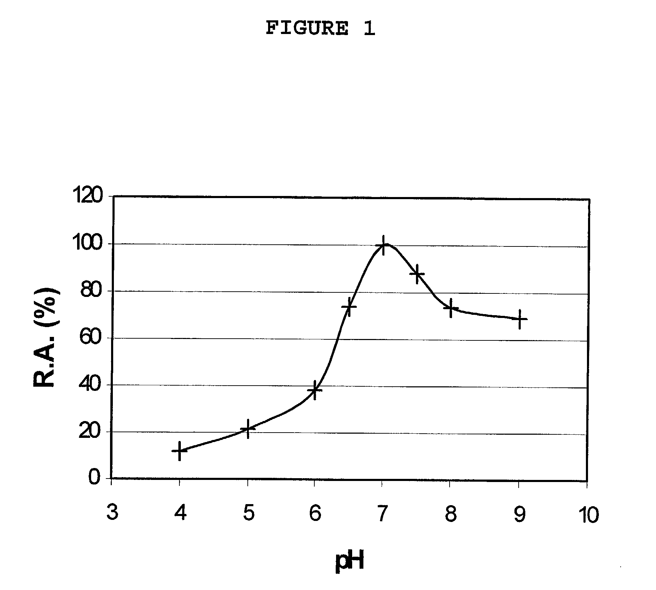

The pH-dependence of glutaminase activity was determined over the pH-range 4-9. Glutaminase activity was tested using 100 mM buffer indicating various pHs and is illustrated in Figure 1. After incubation of the enzyme solution with a final concentration of glutamine of 30 mM in 100 mM buffer for 30 min at 37°C, glutaminase activity was determined as described in the section « glutaminase activity test ».
Buffer used :

　　pH 4 to 6.5 : 100 mM citrate/ 200 mM sodium phosphate
　　pH 7 and 7.5 : 100 mM sodium phosphate
　　pH 8 and 9 : 100 mM Tris/ HCl

Each experiment point is the average of two determinations and the activities are expressed as percentages of the maximum activity observed in the pH range 4-9.
The optimum pH value for the glutaminase according to the present invention is about pH 7.0. The enzyme is less active at lower pH values since around 62 % of the activity is lost at pH about 6.0. On the contrary, the enzyme has greater activity in alkaline than acidic pH because about 74 and 69 % of activity still remains at pH 8 and 9 respectively.

## Temperature dependence

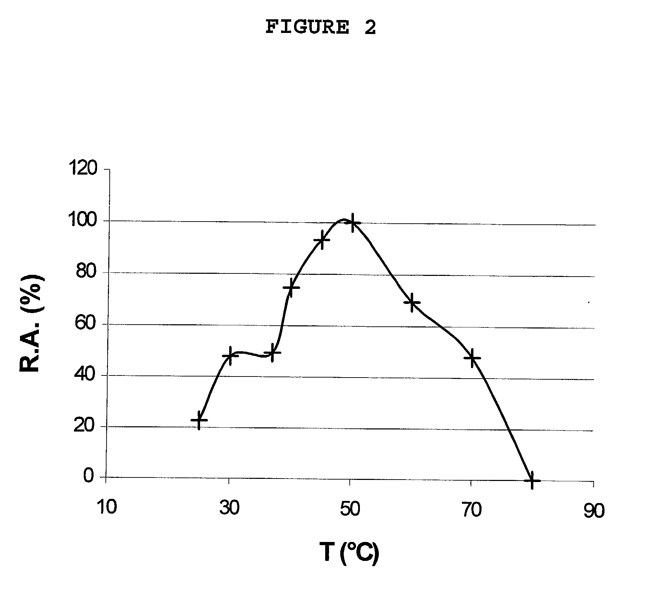

The temperature dependence of glutaminase activity was determined by incubating the enzyme with substrate for 30 min at different temperatures in the range of 25 to 80°C as shown in Figure 2. Glutaminase activity was determined as described in « glutaminase assays ».
The optimal temperature for glutaminase activity is around 50°C and the enzyme retains more than 90% of its activity at about 45°C corresponding to the temperature of the cultivation conditions. It is observed that about 50% of activity still remains at 70°C.

## Salt dependence

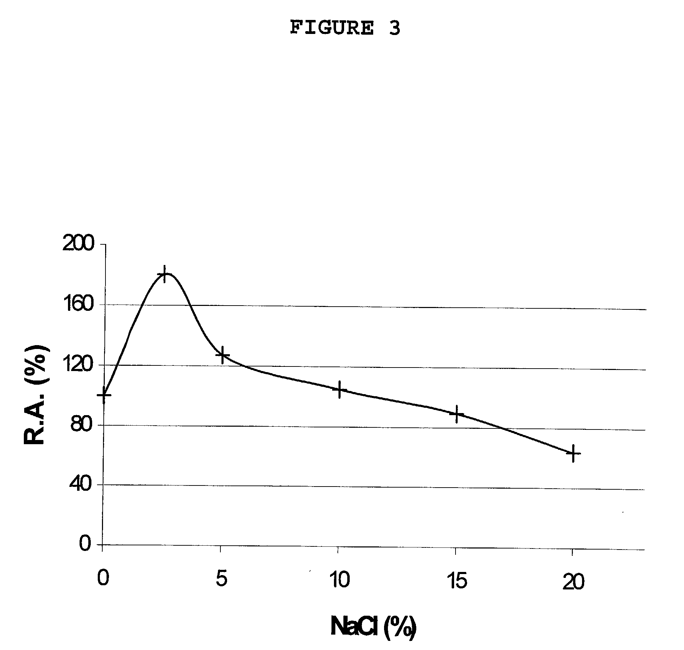

The salt dependence of glutaminase was determined by adding 0-20% (w/v) NaCl to the reaction medium. Relative activities of the enzyme were calculated and expressed as percentage of the activity observed without salt (Figure 3). Glutaminase activity is increased in the presence of NaCl concentrations lower than 10%, in particular 1.8-fold improved at 2.5% of NaCl. Furthermore, in the presence of 15% of salt the enzyme activity is about 90% of that without salt.

## Thermal stability

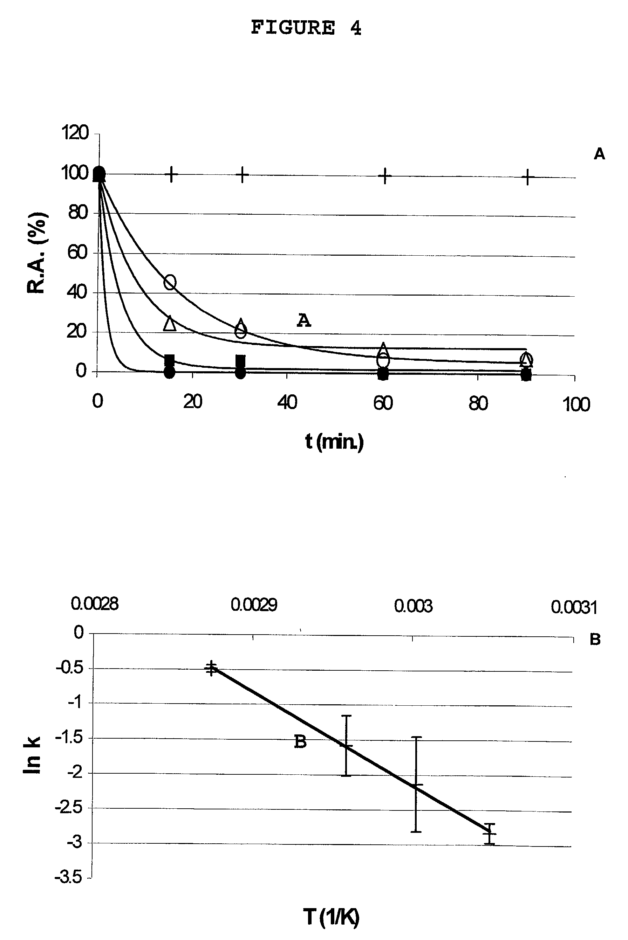

Thermal stability of glutaminase was determined between 45 and 75°C (Figure 4).
Following heat treatment at 45°C, there is no thermal inactivation. Treatments at T ≥ 55°C induce a progressive inactivation of the enzyme and the glutaminase is completely inactivated on incubation at 75°C for about 15 min (Figure 4A).
The apparent inactivation rate constant k for thermal inactivation was plotted against the reciprocal of absolute temperature (Figure 4B). As may be seen, the temperature dependence of the inactivation constant followed the Arrhenius equation. The energy of activation $E_a$ calculated from the slope of the Arrhenius plot was about 90 to 110 kJ.mol$^{-1}$. It is in line with those obtained for most thermotolerant enzymes.
The results clearly show that the thermal stability of glutaminase decreases linearly with increasing temperature from 55 to 75°C.

## Catalytic parameters

Glutaminase-catalysed deamination of glutamine was tested in 50 mM sodium phosphate buffer, pH 7.0, at 37°C using 12 different concentrations of glutamine ranging from 0.5 to 80 mM. Substrate Inhibition was not significant in the glutamine concentration range used. The catalytic behaviour of glutaminase with glutamine can be described by Michaelis-Menten equation (2). The catalytic parameters were calculated by weighted linear regression using Lineweaver-Burk inversion and by non-linear regression of Michaelis-Menten eqn (2) :

$$v = \frac{V_{max}*[S]}{K_m+[S]} \qquad (2)$$

Where v and $V_{max}$ are the initial and maximal velocity of the reaction, [S] is the substrate concentration and $K_m$ is the Michaelis-Menten constant.
The result are in harmony with Michaelis-Menten kinetics. From the intercept on the abscissa of Lineweaver-Burk plot, the $K_m$ value for the enzymatic reaction was estimated to be 5.7 mM and $V_{max}$ = 108 U/l of hydrolysate. The non-linear regression of eqn (2) yielded $K_m$ and $V_{max}$ values of 4.8 ± 0.4 mM and 101 ± 2 U/l, respectively.

So we can conclude that the Km value for the glutaminase of the present invention is from about 4 to 6 mM and Vm is from about 100 to 110 U/l of hydrolysate.

## EXAMPLE I

### Cultivation of *Lactobacillus*

A culture of *Lactobacillus rhamnosus* (CNCM I-2433) containing $5.10^8$ cfu/ml is grown in a medium containing 22% (w/w) wheat gluten (Roquette, Lestern, France), 0.1% alcalase (Novozymes, Bagsvaerd, Denmark), 4% (w/w) Flavorzyme L1000 (Novozymes, Bagsvaerd, Denmark) and 30 mM sodium acetate buffer pH 5.8 for 12h at 45°C. The broth is then cooled at 4°C and immediately subjected to analysis.

## EXAMPLE II

### Enzyme preparation

After cultivation, the medium is washed 3 times with 50 mM sodium phosphate buffer pH 7.0 and finally reconstituted in the same buffer containing 10% (w/v) sucrose and 1 mM PMSF. Because the glutaminase is membrane-bound, the hydrolysate was subjected to 1 mg/ml lysozyme for 1h at 37°C. This solution was stored at 4°C and used for enzyme assays.

## EXAMPLE III

### Production of an improved soy sauce.

0.2 kg of Koji mould was inoculated into a mixture of 1.2 kg of defatted and crushed soybeans, 0.3 kg of wheat gluten, 1.2 kg of salt and 3.4 kg of water to form a moromi according to a conventional process for producing soy sauce koji. In a separate step, the medium obtained according to example I was centrifuged at 2000×g for 10 min. The resulting supernatant was discarded and the cell-containing residue was added to the Moromi above. The mixture thus obtained was subjected to a traditional moromi fermentation process and in that way, the salt-resistant thermotolerant glutaminase accumulated in the cell-containing residue of medium-example I deaminates the glutamine present in Moromi during the time required to achieve a satisfactory yield of glutamate and to produce a mature soy sauce.

## Claims

1. A salt-resistant thermotolerant glutaminase from a micro-organism belonging to the genus *Lactobacillus.*

2. A salt-resistant thermotolerant glutaminase according claim 1, in which the *Lactobacillus* is *Lactobacillus rhamnosus.*

3. A salt-resistant thermotolerant glutaminase according to claim 1, in which the *Lactobacillus rhamnosus* is *Lactobacillus rhamnosus* (CNCM I-2433).

4. A salt-resistant thermotolerant glutaminase according to claim 1, which has a temperature dependence such that it retains more than 80% of its activity between 45°C and 55°C, a salt dependence such that its activity in the presence of up to 15% NaCl is from 80 to 180 % of that without NaCl and a thermal stability such that its energy of activation is about 80 to 150 $kJ.mol^{-1}$.

5. A Process for producing a salt-resistant thermotolerant glutaminase, which comprises cultivating a micro-organism belonging to the genus *Lactobacillus* having the ability to produce a salt-resistant thermotolerant glutaminase, thereby producing the salt-resistant thermotolerant glutaminase and then recovering it.

6. A Process according to claim 5, in which the *Lactobacillus* is *Lactobacillus rhamnosus* NN858 (CNCM I-2433).

7. Use of a mixture containing a salt-resistant thermotolerant glutaminase according to claim 1 in a process for producing a biohydrolysate.

8. Use according to claim 7, in which the mixture is a *Lactobacillus* cell-containing medium or cell-fractions-containing medium.

9. Use according to claim 7, in which the biohydrolysate is a soy sauce or a wheat gluten hydrolysate.

FIGURE 1

FIGURE 2

FIGURE 3

# FIGURE 4

**European Patent Office**

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| D,X | US 6 063 409 A (ABE KEIETSU ET AL) 16 May 2000 (2000-05-16) | 1-4,7,9 | A23J1/00 A23L1/238 A23J3/34 |
| Y | * the whole document * | 8 | |
| X | US 3 912 822 A (YOKOTSUKA TAMOTSU ET AL) 14 October 1975 (1975-10-14) | 1-4,7,9 | |
| Y | * the whole document * | 8 | |
| X | DATABASE WPI Section Ch, Week 199917 Derwent Publications Ltd., London, GB; Class D13, AN 1999-197819 XP002189604 & JP 11 042086 A (DAIWA KASEI KK), 16 February 1999 (1999-02-16) | 1-4,7,9 | |
| Y | * abstract * | 8 | |
| X | DATABASE WPI Section Ch, Week 199049 Derwent Publications Ltd., London, GB; Class B05, AN 1990-364396 XP002189605 & JP 02 261379 A (DAIWA KASEI KK), 24 October 1990 (1990-10-24) | 1-4,7,9 | TECHNICAL FIELDS SEARCHED (Int.Cl.7) A23J A23L |
| Y | * abstract * | 8 | |
| X | DATABASE WPI Section Ch, Week 198919 Derwent Publications Ltd., London, GB; Class D13, AN 1989-141719 XP002189606 & JP 01 086873 A (SHOKUHIN SANGYO BIOREACTOR), 31 March 1989 (1989-03-31) | 1-4,7,9 | |
| Y | * abstract * | 8 | |
| Y | US 5 219 597 A (KIM YOUNG-JIN ET AL) 15 June 1993 (1993-06-15) * the whole document * | 8 | |

-/--

The present search report has been drawn up for all claims

| Place of search | Date of completion of the search | Examiner |
|---|---|---|
| THE HAGUE | 8 February 2002 | De Jong, E |

**European Patent Office**

**EUROPEAN SEARCH REPORT**

Application Number

EP 01 12 1530

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | DATABASE WPI<br>Section Ch, Week 197909<br>Derwent Publications Ltd., London, GB;<br>Class D13, AN 1979-16915B<br>XP002189607<br>& JP 54 008785 A (KIKKOMAN SHOYU CO LTD),<br>23 January 1979 (1979-01-23)<br>* abstract * | 8 | |

| | | | TECHNICAL FIELDS SEARCHED (Int.Cl.7) |

The present search report has been drawn up for all claims

| Place of search | Date of completion of the search | Examiner |
|---|---|---|
| THE HAGUE | 8 February 2002 | De Jong, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.** EP 01 12 1530

This annex lists the patent family members relating to the patent documents cited in the above-mentioned European search report.
The members are as contained in the European Patent Office EDP file on
The European Patent Office is in no way liable for these particulars which are merely given for the purpose of information.

08-02-2002

| Patent document cited in search report | | Publication date | Patent family member(s) | | Publication date |
|---|---|---|---|---|---|
| US 6063409 | A | 16-05-2000 | JP<br>NL | 11332553 A<br>1010806 A1 | 07-12-1999<br>30-11-1999 |
| US 3912822 | A | 14-10-1975 | US | 3852479 A | 03-12-1974 |
| JP 11042086 | A | 16-02-1999 | NONE | | |
| JP 2261379 | A | 24-10-1990 | JP | 2843937 B2 | 06-01-1999 |
| JP 1086873 | A | 31-03-1989 | JP<br>JP | 2048062 C<br>7073495 B | 25-04-1996<br>09-08-1995 |
| US 5219597 | A | 15-06-1993 | KR | 9305199 B1 | 16-06-1993 |
| JP 54008785 | A | 23-01-1979 | JP<br>JP | 1042917 C<br>55033624 B | 23-04-1981<br>01-09-1980 |

EPO FORM P0459

For more details about this annex : see Official Journal of the European Patent Office, No. 12/82